# FASCICULE DE BREVET EUROPEEN

(11) **EP 2 579 756 B1**
(45) Date de publication et mention de la délivrance du brevet: **16.04.2014**
(21) Numéro de dépôt: 11728361.4
(22) Date de dépôt: 06.06.2011
(51) Int. Cl.: A47J 43/07, A47J 43/046, A47J 36/06

(54) **COUVERCLE DE FERMETURE D'UN RÉCIPIENT DE TRAVAIL D'UN APPAREIL ÉLECTROMÉNAGER DE PRÉPARATION CULINAIRE**
VERSCHLUSSDECKEL FÜR EIN ARBEITSGEFÄSS EINES ELEKTRISCHEN HAUSHALTSGERÄTS ZUR LEBENSMITTELVERARBEITUNG
LID FOR CLOSING A WORKING VESSEL OF A HOUSEHOLD ELECTRICAL FOOD PROCESSING APPLIANCE

(30) Priorité: 08.06.2010 FR 1054508
(43) Date de publication de la demande: 17.04.2013
(73) Titulaire: SEB S.A., 69130 Ecully (FR)
(72) Inventeur: LANDEMAINE, Evelyne, 53640 Le Ribay (FR); DESHAYES, Jean-Louis, 53700 Averton (FR); GERARD, Emmanuel, 61410 Couterne (FR)
(74) Mandataire: Bourrières, Patrice
(86) Numéro de dépôt international: PCT/FR2011/051278
(87) Numéro de publication internationale: WO 2011/154647

(56) Documents cités:
- EP-A1- 1 932 458
- EP-A1- 2 060 216
- US-A1- 2005 018 532
- US-A1- 2008 031 087

## Description

La présente invention se rapporte au domaine technique général des appareils électroménagers de préparation culinaire comportant un récipient de travail et des moyens de chauffage permettant de chauffer le contenu du récipient de travail, et se rapporte plus particulièrement à un couvercle de fermeture destiné à équiper un tel récipient de travail, comprenant une ouverture fermée par un bouchon doseur amovible.

Il est connu, de la demande de brevet US2005/018532, un appareil de préparation culinaire comportant un couvercle de fermeture d'un récipient de travail comprenant une ouverture dans laquelle vient se loger un bâton mélangeur. Le bâton mélangeur comporte un passage permettant l'introduction de liquide directement dans le récipient de travail. Cependant, le bâton mélangeur ne permet pas de doser la quantité d'ingrédients introduite à travers le passage.

Il est connu, du modèle d'utilité CN 201316159, un couvercle de fermeture comportant une ouverture pour l'introduction d'ingrédients recevant un bouchon doseur amovible, ce couvercle étant destiné à équiper un récipient de travail muni de moyens de chauffage. Dans ce document, le bouchon doseur comporte une poignée de préhension, s'étendant radialement vers l'extérieur, permettant de faciliter la manipulation du bouchon doseur et notamment son extraction de l'ouverture.

Cependant, ce bouchon doseur comporte un corps et une poignée de préhension qui forment un ensemble monobloc favorable à l'échange thermique entre le corps du bouchon doseur et la poignée de préhension. Il s'ensuit un risque important pour l'utilisateur de se brûler lorsqu'il saisit le bouchon doseur par sa poignée étant donné la conduction thermique qui s'établit entre la poignée de préhension et le corps du bouchon doseur soumis au flux de vapeur généré par la cuisson des aliments à l'intérieur du récipient de travail. De plus, dans ce document, le flux de vapeur traverse le couvercle par des ouvertures qui sont réparties sur pratiquement toute la périphérie de l'ouverture du couvercle de sorte que le flux de vapeur, à la sortie du couvercle, passe à proximité de la poignée de préhension, ce qui augmente le risque de brûlure par l'utilisateur.

Aussi, un but de la présente invention est de proposer un appareil électroménager de préparation culinaire remédiant à ces inconvénients qui soit simple et économique à réaliser.

A cet effet, l'invention se rapporte à un couvercle de fermeture d'un récipient de travail d'un appareil électroménager de préparation culinaire comprenant des moyens de chauffage permettant de chauffer le contenu du récipient de travail, le couvercle comprenant un bouchon doseur amovible comprenant un corps venant se loger dans une ouverture du couvercle, le corps étant surmonté d'une poignée de préhension, caractérisé en ce que la poignée de préhension est constituée par une pièce indépendante qui est rapportée sur le corps du bouchon doseur.

Par pièce indépendante, on entend une pièce qui est fabriquée indépendamment du corps du bouchon doseur et ne forme donc pas un ensemble monobloc avec ce dernier.

Une telle caractéristique présente l'avantage de créer un pont thermique à l'interface entre le corps et la poignée de préhension qui freine l'échange thermique, et permet donc une meilleure isolation thermique de la poignée de préhension.

Selon une autre caractéristique de l'invention, le corps et la poignée de préhension du bouchon doseur sont réalisés dans des matériaux plastiques différents.

Une telle caractéristique permet de sélectionner un matériau transparent pour le corps du bouchon doseur, afin d'offrir une bonne visibilité lors de l'utilisation du bouchon doseur, et un matériau opaque pour la poignée de préhension.

Selon encore une autre caractéristique de l'invention, le corps et la poignée de préhension du bouchon doseur sont réalisés dans des matériaux plastiques.

Selon une autre caractéristique de l'invention, la poignée de préhension du bouchon doseur est réalisée en polypropylène chargé en fibres de verre à 30% ou en polyester chargé en fibres de verre à 20%.

Selon une autre caractéristique de l'invention, le corps du bouchon doseur est réalisé en polycarbonate ou en copolyester.

Selon une autre caractéristique de l'invention, la poignée de préhension est fixée sur le corps du bouchon doseur aux moyens de languettes élastiques.

Selon une autre caractéristique de l'invention, la poignée de préhension s'étend au dessus du centre du bouchon doseur et comporte deux extrémités reliées au corps du bouchon doseur.

Une telle caractéristique permet d'avoir une poignée de préhension compacte, bien intégrée dans le volume du bouchon doseur.

Selon une autre caractéristique de l'invention, le couvercle de fermeture comporte des passages pour la circulation de la vapeur entre le corps du bouchon doseur et l'ouverture du couvercle, les passages permettant à la vapeur produite dans le récipient de travail de s'échapper à l'extérieur du récipient de travail.

Selon une autre caractéristique de l'invention, le couvercle de fermeture comporte une paroi externe comprenant une nervure s'étendant en bordure de l'ouverture sur une partie de la périphérie de l'ouverture.

Une telle nervure présente l'avantage de créer une barrière pare-vapeur qui évite l'émission d'un flux de vapeur du côté où est située la nervure.

Selon une autre caractéristique de l'invention, le corps du bouchon doseur comporte un déflecteur de vapeur déviant radialement le flux de vapeur pour l'éloigner de la poignée de préhension.

Selon une autre caractéristique de l'invention, le corps du bouchon doseur comporte une partie inférieure cylindrique et une partie supérieure conique divergente.

Selon une autre caractéristique de l'invention, l'ouverture présente une forme circulaire et se prolonge par un entonnoir formant un logement de réception pour le bouchon doseur, l'entonnoir comportant une partie supérieure conique convergeant vers une partie inférieure de section transversale sensiblement triangulaire.

Selon une autre caractéristique de l'invention, le bouchon doseur comporte des moyens de fixation de type baïonnette permettant d'immobiliser le bouchon doseur dans l'ouverture du couvercle.

L'invention concerne également un appareil électroménager de préparation culinaire comportant un récipient de travail renfermant un outil de mixage et comprenant des moyens de chauffage permettant de chauffer le contenu du récipient de travail, dans lequel le récipient de travail est fermé par un couvercle tel que précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire équipé d'un couvercle selon un mode particulier de réalisation de l'invention,
- la figure 2 est une vue en perspective du dessus du couvercle de l'appareil de la figure 1, avec le bouchon doseur retiré de l'ouverture,
- la figure 3 est une vue en perspective du dessous du couvercle de la figure 2,
- la figure 4 est une vue en perspective du dessous du bouchon doseur représenté seul,
- la figure 5 est une vue en perspective du bouchon doseur équipant le couvercle de la figure 2 avec sa poignée de préhension non assemblée,
- la figure 6 est une vue en perspective du dessous de la poignée de préhension représentée seule,
- la figure 7 est une vue de dessus du couvercle de la figure 2,
- les figures 8 et 9 sont des vues en coupe du couvercle de la figure 7 respectivement selon les lignes VIII-VIII et IX-IX,
- la figure 10 est une vue en perspective d'un bouchon doseur selon un second mode de réalisation de l'invention.

Seuls les éléments nécessaires à la compréhension de l'invention ont été représentés. Pour faciliter la lecture des dessins, les mêmes éléments portent les mêmes références d'une figure à l'autre.

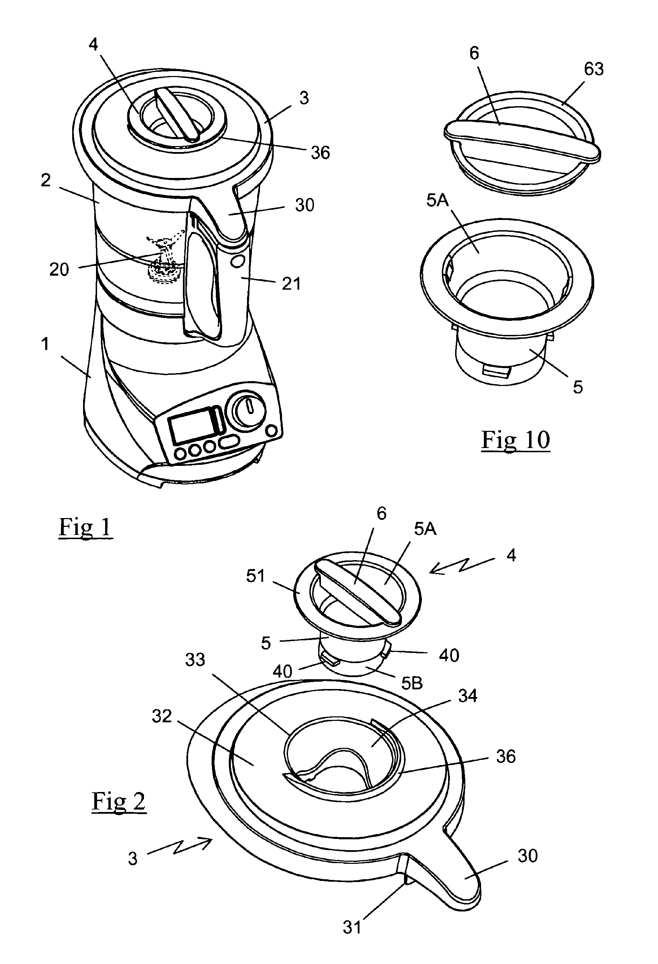

La figure 1 représente un appareil de préparation culinaire, de type blender, comportant un boîtier 1 supportant un récipient de travail 2 amovible comprenant une anse 21 latérale et un fond recevant un outil de mixage 20, représenté en pointillé sur cette figure.

L'outil de mixage 20 est entraîné en rotation par un moteur intégré dans le boîtier 1 et le fond du récipient de travail 2 est muni d'une résistance chauffante électrique, du type résistance blindée, non représentés sur les figures, permettant de chauffer le contenu du récipient de travail 2.

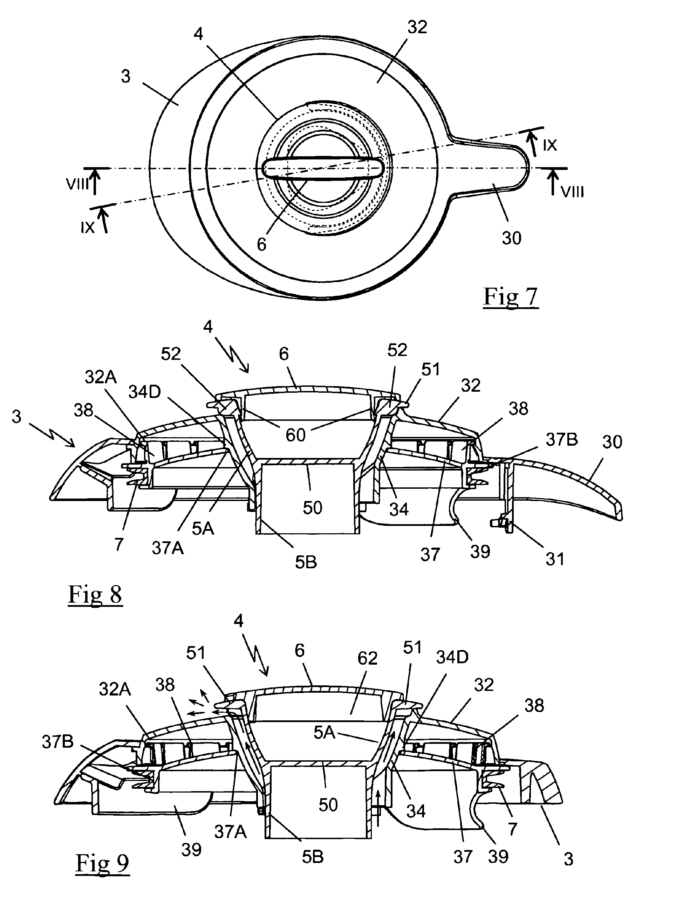

Le récipient de travail 2 est fermé par un couvercle 3 amovible comportant une excroissance 30 latérale venant dans le prolongement de l'anse 21 lorsque le couvercle 3 est verrouillé sur le récipient de travail 2, cette excroissance 30 latérale supportant un doigt de verrouillage 31, visible sur la figure 8, venant pénétrer à l'intérieur de l'anse 21 pour actionner une tige de sécurité.

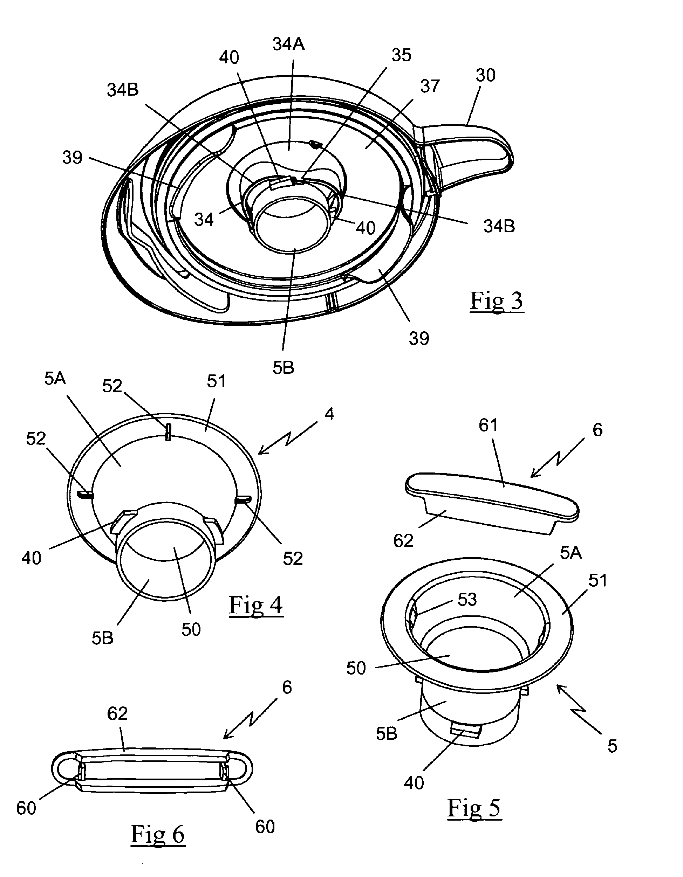

Conformément aux figures 2 et 3, le couvercle 3 comporte une paroi externe 32 avantageusement réalisée en matériau plastique transparent, tel que du polycarbonate ou bien du copolyester de type Tritan commercialisé par la société Eastman, comprenant une ouverture 33 centrale et circulaire débouchant sur un entonnoir 34 formant un logement de réception pour un bouchon doseur 4.

Dans le mode de réalisation particulier décrit sur ces figures, l'entonnoir 34 comporte une partie supérieure conique 34A convergeant vers une partie inférieure 34B présentant une section transversale de forme globalement triangulaire comprenant trois lobes disposés à 120° au travers desquels viennent pénétrer trois ergots 40, également répartis à 120°, portés par le bouchon doseur 4 lorsque ce dernier est disposé dans l'entonnoir 34.

De manière préférentielle, le bouchon doseur 4 comporte un corps 5 monobloc comprenant une partie supérieure conique 5A convergeant vers une partie inférieure cylindrique 5B supportant les ergots 40 de verrouillage, ces trois ergots 40 venant s'engager sous le bord inférieur de l'entonnoir 34 lorsque le bouchon doseur 4 est tourné d'une vingtaine de degrés, réalisant ainsi une liaison de type baïonnette, le bord inférieur de l'entonnoir 34 comportant des butées 35 stoppant la rotation du bouchon doseur 4 dans une position de verrouillage.

Comme on peut le voir sur la figure 4, la partie inférieure cylindrique 5B comporte une extrémité ouverte qui donne accès à un volume de dosage, préférentiellement gradué, dont le fond est constitué par une paroi de séparation 50 s'étendant entre la partie inférieure cylindrique 5B et la partie supérieure conique 5A, ce volume de dosage pouvant être utilisé en tenant le bouchon doseur 4 à l'envers afin d'aider l'utilisateur à quantifier une quantité d'ingrédients à ajouter dans le récipient de travail 2.

Le corps 5 du bouchon doseur 4 comporte également une collerette 51 périphérique s'étendant radialement à l'extrémité de la partie supérieure conique 5A, sur une largeur de l'ordre de 10 mm, et présentant un diamètre externe supérieur au diamètre de l'ouverture 33 du couvercle 3 de telle sorte que la collerette 51 recouvre le bord de l'ouverture 33 lorsque le bouchon doseur 4 est disposé dans l'entonnoir 34.

La face inférieure de la collerette 51 présente avantageusement quatre entretoises 52, réparties à 90° les unes des autres, qui viennent reposer sur le bord de l'ouverture 33 lorsque le bouchon doseur 4 est disposé sur le couvercle 3, ces entretoises 52 s'étendant sur seulement une partie de la largeur radiale de la collerette 51. Les entretoises 52 présentent une hauteur de l'ordre de 3 mm et surélèvent la collerette 51 de quelques millimètres par rapport au bord de l'ouverture 33 afin que la liaison entre le bouchon doseur 4 et le couvercle 3 ne soit pas étanche à la vapeur.

Comme on peut le voir sur la figure 2, le couvercle 3 comporte quant à lui une nervure 36, d'une hauteur de l'ordre de 3 mm, disposée légèrement en retrait du bord de l'ouverture 33 afin que la nervure 36 se trouve à la périphérie de la zone sur laquelle viennent prendre appui les entretoises 52 de la collerette 51. Cette nervure 36 s'étend parallèlement au bord de l'ouverture 33, en parcourant un arc de cercle de l'ordre de 200° du côté de l'excroissance 30 du couvercle, de manière à former une barrière pare-vapeur sur laquelle vient reposer la périphérie de la collerette 51.

Conformément aux figures 5 et 6, le bouchon doseur 4 comporte une poignée de préhension 6 constituée par une pièce indépendante, fabriquée séparément du corps 5 du bouchon doseur, la poignée de préhension 6 étant préférentiellement réalisée dans une matière plastique différente de celle du corps 5 du bouchon doseur. A titre d'exemple, le corps 5 du bouchon doseur est réalisé en matière plastique transparente, telle que du polycarbonate ou du copolyester de type Tritan, et la poignée de préhension 6 est réalisée en polypropylène renforcé en fibres de verre à 30% ou en polyester saturé renforcé en fibres de verre à 20%.

La poignée de préhension 6 est rapportée sur le corps 5 du bouchon doseur en étant maintenue par des moyens de fixation avantageusement constitués par des languettes élastiques 60, visibles sur la figure 6, disposées aux deux extrémités de la poignée de préhension 6, les languettes élastiques 60 étant munies d'une tête venant s'engager derrière un cran 53 de verrouillage, visible sur la figure 5, faisant saillie sur la face interne du corps 5 du bouchon doseur.

De manière préférentielle, la poignée de préhension 6 comporte une paroi supérieure 61 légèrement convexe présentant une longueur supérieure au diamètre de la partie supérieure conique 5A du corps 5, de sorte que les deux extrémités de la paroi supérieure 61 viennent reposer sur la collerette 51, et comprend deux flancs latéraux 62 s'engageant à l'intérieur de la partie supérieure conique 5A, les flancs latéraux 62 présentant une forme et une longueur adaptées pour venir de manière adjacente au corps 5 du bouchon doseur 4.

Un tel assemblage présente l'avantage de permettre une fixation simple et efficace de la poignée de préhension 6 sur le corps 5 du bouchon doseur 4 tout en créant un pont thermique limitant la diffusion de la chaleur du corps 5 du bouchon doseur 4 vers la poignée de préhension 6.

Les figures 7 à 9 représentent le couvercle 3 équipé du bouchon doseur 4 conforme à l'invention.

Conformément à aux figures 8 et 9, le couvercle 3 comporte une paroi interne 37 constituée par un disque rapporté à l'intérieur du couvercle, ce disque 37 étant réalisé en matériau plastique transparent, tel que du polycarbonate ou du copolyester de type Tritan.

Le disque 37 comprend un orifice central 37A, circulaire, au travers duquel vient s'engager l'entonnoir 34 porté par la paroi externe 32 du couvercle, et s'étend radialement jusqu'à la périphérie du couvercle 3 en ménageant un espace entre le disque 37 et la paroi externe 32, la périphérie du disque 37 comportant des pattes de fixation 38 qui s'engagent élastiquement dans une rainure 32A de la face interne de la paroi externe 32. De cette manière, le disque 37 est monté mobile en rotation par rapport à la paroi externe 32 et le bord de l'orifice central 37A repose sur un épaulement 34D porté par la face externe de l'entonnoir 34 de sorte qu'un volume d'air est contenu dans l'espace séparant le disque 37 et la paroi externe 32, constituant ainsi une couche isolante limitant le transfert thermique de l'intérieur du récipient de travail 2 vers la paroi externe 32 du couvercle 3.

Afin de faciliter le démontage du disque 37, par exemple pour effectuer un nettoyage complet du couvercle, le disque 37 comporte deux poignées 39 disposées symétriquement par rapport au centre du disque 37, visibles sur la figure 3, ces deux poignées 39 pouvant être saisies pour désolidariser le disque 37 de la paroi externe 32 en déformant élastiquement les pattes de fixation.

Le disque 37 comporte également une gorge 37B périphérique à l'intérieur de laquelle est disposé un joint d'étanchéité 7 comprenant une lèvre destinée à reposer sur le bord supérieur du récipient de travail 2 lorsque le couvercle 3 est verrouillé sur le récipient de travail 2, ce joint d'étanchéité 7 empêchant que la vapeur produite à l'intérieur du récipient de travail ne s'échappe par la périphérie du couvercle 3.

Ainsi, lorsque le couvercle 3 est verrouillé sur le récipient de travail 2, la vapeur produite par la cuisson des aliments passe essentiellement par les passages laissés libres au niveau des lobes de la partie inférieur 34B de l'entonnoir de sorte que la vapeur chemine le long du corps 5 du bouchon doseur 4, en suivant le parcours indiqué par les flèches sur la figure 9, puis s'échappe latéralement à la collerette 51 du côté du couvercle 3 ne comprenant pas la nervure 36, c'est-à-dire à l'opposé de l'anse 21 du récipient de travail.

En conséquence les risques de brûlures par la vapeur lorsque l'utilisateur manipule le récipient de travail 2 par son anse 21 sont considérablement réduits.

L'utilisateur peut également manipuler sans crainte le bouchon doseur 4 en le saisissant par sa poignée de préhension 6 étant donné que cette dernière est isolée du corps 5 du bouchon doseur 4 grâce au faible transfert thermique s'établissant entre la poignée de préhension 6 rapportée et le corps 5 du bouchon doseur 4.

Enfin, l'utilisateur peut toucher la paroi externe 32 du couvercle sans risque de se brûler, la transmission de chaleur de l'intérieur du récipient de travail vers la paroi externe 32 du couvercle étant fortement réduite par la présence de la paroi interne 37.

La figure 10 illustre une variante de réalisation du bouchon doseur 4 dans laquelle la poignée de préhension 6 est solidaire d'une bague périphérique 63 venant s'insérer à l'intérieur de la partie supérieure conique 5A du corps du bouchon doseur 4, les moyens d'assemblage de la poignée de préhension 6 sur le corps 5 du bouchon doseur 4 étant identiques à ceux précédemment décrits.

Une telle variante de réalisation présente l'avantage de réduire encore le risque que l'utilisateur ne se brûle en manipulant le bouchon doseur, la présence de la bague autour de la poignée formant une barrière de protection évitant notamment que les doigts ne viennent toucher la paroi du corps 5 du bouchon doseur 4.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, la poignée de préhension pourra être fixée par collage.

## Revendications

1. Couvercle (3) de fermeture d'un récipient de travail (2) d'un appareil électroménager de préparation culinaire comprenant des moyens de chauffage permettant de chauffer le contenu du récipient de travail (2), le couvercle comprenant un bouchon doseur (4) amovible comprenant un corps (5) venant se loger dans une ouverture (33) dudit couvercle (3), ledit corps (5) comprenant un volume de dosage permettant de quantifier une quantité d'ingrédients à ajouter dans le récipient de travail (2) et étant surmonté d'une poignée de préhension (6), **caractérisé en ce que** ladite poignée de préhension (6) est constituée par une pièce indépendante qui est rapportée sur le corps (5) du bouchon doseur (4).

2. Couvercle (3) de fermeture selon la revendication 1, **caractérisé en ce que** le corps (5) et la poignée de préhension (6) du bouchon doseur (4) sont réalisés dans des matériaux plastiques différents.

3. Couvercle (3) de fermeture selon la revendication 2, **caractérisé en ce que** la poignée de préhension (6) du bouchon doseur (4) est réalisée en polypropylène chargé en fibres de verre à 30% ou en polyester chargé en fibres de verre à 20%.

4. Couvercle (3) de fermeture selon l'une quelconque des revendications 2 à 3, **caractérisé en ce que** le corps (5) du bouchon doseur (4) est réalisé en polycarbonate ou en copolyester.

5. Couvercle (3) de fermeture selon l'une quelconque des revendications 1 à 4, **caractérisé en ce que** la poignée de préhension (6) est fixée sur le corps (5) du bouchon doseur (4) aux moyens de languettes élastiques (60).

6. Couvercle (3) de fermeture selon l'une quelconque des revendications 1 à 5, **caractérisé en ce que** la poignée de préhension (6) s'étend au dessus du centre du bouchon doseur (4) et comporte deux extrémités reliées au corps du bouchon doseur (4).

7. Couvercle (3) de fermeture selon l'une quelconque des revendications 1 à 6, **caractérisé en ce qu'**il comporte des passages pour la circulation de la vapeur entre le corps (5) du bouchon doseur (4) et l'ouverture (33) du couvercle (3).

8. Couvercle (3) de fermeture selon la revendication 7, **caractérisé en ce qu'**il comporte une paroi externe (32) comprenant une nervure (36) s'étendant en bordure de l'ouverture (33) sur une partie de la périphérie de l'ouverture (33).

9. Couvercle (3) de fermeture selon l'une quelconque des revendications 7 à 8, **caractérisé en ce que** le corps (5) du bouchon doseur (4) comporte un déflecteur (51) de vapeur déviant radialement le flux de vapeur pour l'éloigner de la poignée de préhension (6).

10. Couvercle (3) de fermeture selon l'une quelconque des revendications 1 à 9, **caractérisé en ce que** le corps (5) du bouchon doseur (4) comporte une partie inférieure cylindrique (5B) et une partie supérieure conique (5A) divergente.

11. Couvercle (3) de fermeture selon l'une quelconque des revendications 1 à 10, **caractérisé en ce que** l'ouverture (33) présente une forme circulaire et se prolonge par un entonnoir (34) formant un logement de réception pour le bouchon doseur (4), ledit entonnoir (34) comportant une partie supérieure conique (34A) convergeant vers une partie inférieure (34B) de section transversale sensiblement triangulaire.

12. Couvercle (3) de fermeture selon l'une quelconque des revendications 1 à 11, **caractérisé en ce que** le bouchon doseur (4) comporte des moyens de fixation (40) de type baïonnette permettant d'immobiliser le bouchon doseur (4) dans l'ouverture (33) du couvercle.

13. Appareil électroménager de préparation culinaire comportant un récipient de travail (2) renfermant un outil de mixage (20) et comprenant des moyens de chauffage permettant de chauffer le contenu du récipient de travail (2), ledit récipient étant fermé par un couvercle (3), **caractérisé en ce que** ledit couvercle (3) est conforme à l'une des revendications 1 à 12.

## Patentansprüche

1. Verschlussdeckel (3) eines Arbeitsbehälters (2) eines Elektrohaushaltsgerätes zur Zubereitung von Nahrungsmitteln, das Heizmittel umfasst, mit denen sich der Inhalt des Arbeitsbehälters (2) erhitzen lässt, wobei der Deckel eine abnehmbare Dosierkappe (4) umfasst, die einen Körper (5) umfasst, der in einer Öffnung (33) des genannten Deckels (3) sitzt, wobei der genannte Körper (5) ein Dosiervolumen umfasst, das die quantitative Erfassung einer in den Arbeitsbehälter (2) zu gebenden Menge von Zutaten ermöglicht und über dem ein Griff (6) angeordnet ist, **dadurch gekennzeichnet, dass** der genannte Griff (6) aus einem unabhängigen Element besteht, das an dem Körper (5) der Dosierkappe (4) angebracht ist.

2. Verschlussdeckel (3) nach Anspruch 1, **dadurch gekennzeichnet, dass** der Körper (5) und der Griff (6) der Dosierkappe (4) aus unterschiedlichen Kunststoffen gefertigt sind.

3. Verschlussdeckel (3) nach Anspruch 2, **dadurch gekennzeichnet, dass** der Griff (6) der Dosierkappe (4) aus zu 30 % mit Glasfasern verstärktem Polypropylen oder aus zu 20 % mit Glasfasern verstärktem Polyester gefertigt ist

4. Verschlussdeckel (3) nach einem der Ansprüche 2 bis 3, **dadurch gekennzeichnet, dass** der Körper (5) der Dosierkappe (4) aus Polycarbonat oder aus Copolyester gefertigt ist.

5. Verschlussdeckel (3) nach einem der Ansprüche 1 bis 4, **dadurch gekennzeichnet, dass** der Griff (6) mittels elastischen Laschen (60) am Körper (5) der Dosierkappe (4) befestigt ist.

6. Verschlussdeckel (3) nach einem der Ansprüche 1 bis 5, **dadurch gekennzeichnet, dass** der Griff (6) über die Mitte der Dosierkappe (4) verläuft und zwei Enden aufweist, die mit dem Körper der Dosierkappe (4) verbunden sind.

7. Verschlussdeckel (3) nach einem der Ansprüche 1 bis 6, **dadurch gekennzeichnet, dass** er Durchlässe für die Zirkulation des Dampfes zwischen dem Körper (5) der Dosierkappe (4) und der Öffnung (33) des Deckels (3) aufweist.

8. Verschlussdeckel (3) nach Anspruch 7, **dadurch gekennzeichnet, dass** er eine äußere Wand (32) mit einer Rippe (36) aufweist, die am Rand der Öffnung (33) an einem Teil des Umfangs der Öffnung (33) verläuft.

9. Verschlussdeckel (3) nach einem der Ansprüche 7 bis 8, **dadurch gekennzeichnet, dass** der Körper (5) der Dosierkappe (4) einen Dampfabweiser (51) aufweist, der den Dampfstrom radial ablenkt, um ihn von dem Griff (6) fernzuhalten.

10. Verschlussdeckel (3) nach einem der Ansprüche 1 bis 9, **dadurch gekennzeichnet, dass** der Körper (5) der Dosierkappe (4) einen innenliegenden zylindrischen Teil (5B) und einen oberen sich konisch ausweitenden Teil (5A) aufweist.

11. Verschlussdeckel (3) nach einem der Ansprüche 1 bis 10, **dadurch gekennzeichnet, dass** die Öffnung (33) eine Kreisform aufweist und sich durch einen Trichter (34) fortsetzt, der eine Aufnahme für die Dosierkappe (4) bildet, wobei der genannte Trichter (34) einen oberen konischen Teil (34A) aufweist, der sich zu einem unteren Teil (34B) mit im Wesentlichen dreieckigem Querschnitt hin verjüngt.

12. Verschlussdeckel (3) nach einem der Ansprüche 1 bis 11, **dadurch gekennzeichnet, dass** die Dosierkappe (4) bajonettverschlussartige Befestigungsmittel (40) aufweist, durch die sich die Dosierkappe (4) in der Öffnung (33) des Deckels arretieren lässt.

13. Elektrohaushaltsgerät zur Zubereitung von Nahrungsmitteln, das einen Arbeitsbehälter (2) aufweist, der ein Mischwerkzeug (20) einschließt und Heizmittel umfasst, mit denen sich der Inhalt des Arbeitsbehälters (2) erhitzen lässt, wobei der genannte Behälter durch einen Deckel (3) verschlossen wird, **dadurch gekennzeichnet, dass** der genannte Deckel (3) einem der Ansprüche 1 bis 12 entspricht.

## Claims

1. Closure lid (3) of a working receptacle (2) of a food preparation household electrical appliance comprising heating means for heating the contents of the working receptacle (2), the lid comprising a removable dosing cap (4) comprising a body (5) housed in an opening (33) of said lid (3), said body (5) comprising a dosing volume for quantifying a quantity of ingredients to be added in the working receptacle (2) and being surmounted by a gripping handle (6), **characterised in that** said gripping handle (6) consists of a separate part which is attached to the body (5) of the dosing cap (4).

2. Closure lid (3) according to claim 1, **characterised in that** the body (5) and the gripping handle (6) of the dosing cap (4) are made from different plastic materials.

3. Closure lid (3) according to claim 2, **characterised in that** the gripping handle (6) of the dosing cap (4) is made from polypropylene reinforced with glass fibres to 30 % or polyester reinforced with glass fibres to 20 %.

4. Closure lid (3) according to claim 2 or 3, **characterised in that** the body (5) of the dosing cap (4) is made from polycarbonate or copolyester.

5. Closure lid (3) according to any of claims 1 to 4, **characterised in that** the gripping handle (6) is attached to the body (5) of the dosing cap (4) with flexible tabs (60).

6. Closure lid (3) according to any of claims 1 to 5, **characterised in that** the gripping handle (6) extends above the centre of the dosing cap (4) and comprises two ends connected to the body of the dosing cap (4).

7. Closure lid (3) according to any of claims 1 to 6, **characterised in that** it comprises passages for the circulation of steam between the body (5) of the dosing cap (4) and the opening (33) of the lid (3).

8. Closure lid (3) according to claim 7, **characterised in that** it comprises an external wall (32) comprising a rib (36) running along the edge of the opening (33) over part of the periphery of the opening (33).

9. Closure lid (3) according to claim 7 or 8, **characterised in that** the body (5) of the dosing cap (4) comprises a steam deflector (51) deviating the flow of steam radially to direct it away from the gripping handle (6).

10. Closure lid (3) according to any of claims 1 to 9, **characterised in that** the body (5) of the dosing cap (4) comprises a cylindrical lower part (5B) and a divergent tapered upper part (5A).

11. Closure lid (3) according to any of claims 1 to 10, **characterised in that** the opening (33) has a circular shape and extends with a funnel (34) forming a housing to accommodate the dosing cap (4), said funnel (34) comprising a tapered upper part (34A) converging towards a lower part (34B) of substantially triangular transversal cross section.

12. Closure lid (3) according to any of claims 1 to 11, **characterised in that** the dosing cap (4) comprises bayonet type attachment means (40) to lock the dosing cap (4) in the opening (33) of the lid.

13. Food preparation household electrical appliance comprising a working receptacle (2) containing a mixing tool (20) and comprising heating means for heating the contents of the working receptacle (2), said receptacle being closed by a lid (3), **characterised in that** said lid (3) is conform with one of claims 1 to 12.
